# EUROPEAN PATENT APPLICATION

(11) **EP 1 205 895 A2**
(43) Date of publication of application: **15.05.2002**
(21) Application number: 01126934.7
(22) Date of filing: 13.11.2001
(51) Int. Cl.: G07G 1/12, G07F 7/08

(54) **Integrated cash register**

(30) Priority: 14.11.2000 IT TO001058
(71) Applicant: Olivetti Tecnost S.p.A., 10015 Ivrea (TO) (IT)
(72) Inventor: Scarton, Gianrico, 10015 Ivrea (TO) (IT)

(57) **Abstract**

Equipment (10), or integrated cash register, designed to be used at the point of sale to effect both standard cash transactions and the associated payment transactions electronically, i.e. without cash changing hands. It comprises an electronic transaction unit (13) having a card input unit (13a) suitable for receiving a payment card (15) to enable payment; a single keyboard (12) for use in inputting the cash transaction data (DAT1), for activating the transaction, and also, where required, for inputting the PIN number associated with the payment card (15); and a GSM transmission/reception unit (18), or modem, for transmitting the data (DAT3) processed by the transaction unit (13), and which defines the payment to be made, via radio waves (24) to a remote reception unit (22), such as a bank. The integrated cash register (10) of this invention has an extremely compact structure characterized by a limited number of parts and, as it has been designed to be powered preferably by batteries (25) and does not, therefore, have any connection cables, is an extremely portable and manageable device. This integrated cash register may also be used to effect telephone calls. When not in use, it may also be connected to a fixed docking station (150), which may be used to charge the batteries, for example, or to connect the cash register to other data input/output devices and/or other computing/processing, equipment.

## Description

### FIELD OF THE INVENTION

The invention presented here relates to electronic equipment, or an integrated cash register, designed to be used typically at a point of sale to effect both standard cash registration operations and payment transactions electronically, where no cash is used.

### BACKGROUND OF THE INVENTION

There are already a large number of solutions and electronic devices commercially available for effecting payment at a point of sale or, in general, for the transferring of funds without the use of cash, or for the acceptance of cheques and other similar non-cash payment methods.

As is well known, this equipment, generally called electronic transaction units, electronic payment units, units or devices for electronic payment, or other similar expressions, have had remarkable commercial success due both to their practicality and to the security they offer in effecting payment transactions.

For this reason, these devices are already used in a significant and ever increasing number of points of sale, not only in shopping centres and supermarkets, but also in the more traditional sales points such as small shops.

The category of devices and equipment used to effect an electronic transfer of funds also includes the equipment, typically associated with stations and/or terminals designed to provide fully automatic banking services, that allow a wide range of transactions, such as the withdrawal or payment in of money or the making of a payment without the physical presence of a cashier, to be carried out.

Generally speaking, these electronic transaction units are all designed to receive a payment card, which is owned by the user and specifically designed for that purpose. This card must first be read and recognised by the input or reader unit before the transaction, payment, or transfer of funds can be effected.

These cards may be of different kinds, may employ different recognition methods, and may be used in different ways. Furthermore, these cards may be divided into two main categories on the basis of the technology they are made with: they may either be so-called magnetic cards or they may be so-called electronic cards.

Magnetic cards are typically characterized by a magnetic strip. Data is stored on this strip when the card is created and this data is not updated when the card is used, it is a read-only card.

Electronic cards, on the other hand, have a number of additional features with respect to magnetic cards, thanks to the circuits that are printed on them. The data that is typically stored on these cards may not only be read, it may also be updated and overwritten. For example, an electronic card may contain a maximum credit limit, which is reduced by the relevant amount each time the customer uses the card to effect a payment.
These payment cards are also divided into categories depending on the way in which they are used and/or the type of transaction they allow you to effect. For example, the payment card may either be a debit card, known commercially in Italy as BANCOMAT (ATM) cards, or it may be a credit card, such as VISA, CARTASI, etc. Both debit and credit cards may be made using either magnetic or electronic cards.

Existing electronic transaction units are designed to accept one or more card types and may often be distinguished on the basis of the type of card that they are able to accept.

Generally speaking, these electronic transaction units will then transmit the payment and transaction data to the remote unit, such as a bank, via cable. A telephone landline is typically used for this purpose. The electronic transaction units are connected to the telephone landline via an appropriate interface, or modem, which allows them to transmit and receive data from the remote unit.

Another device that is widely known and used at cash desks to facilitate payment transactions is the cash register.

The purpose of the cash register is essentially to register, process and enter in the accounts, often for fiscal purposes, the various sales transactions that have been effected at a point of sale, and to operate as a cash till for the receipt of the corresponding cash payments. As we have seen, these payments may either be in the "traditional" cash form or may be made electronically using one of the electronic payment or transaction units that have just been described above.

Current state-of-the-art cash registers and electronic transaction units, even when used in conjunction with one another, are typically two separate and distinct pieces of equipment that differ structurally from one another.

This gives rise to a certain amount of inconvenience and particularly to the fact that it is often necessary to use two completely distinct pieces of equipment that may be situated at quite a distance from one another. Having to use two separate pieces of equipment at the same time may prove inconvenient both for the cashier and for the customer, and may considerably increase the amount of time it takes to effect the transaction concerned.

Not only that, but due to the fact that having a separate cash register and electronic transaction unit is more bulky than having a single machine, these pieces of equipment are often bulky and unwieldy when used together, and it may prove difficult to locate them at the same place, or cash desk, if space is limited.

Finally, the combined cost of buying a separate cash register and payment unit is considerable, and any reduction of these costs would therefore be welcome.

### SUMMARY OF THE INVENTION

The object of this invention, therefore, is to produce a piece of equipment that combines the function of a conventional cash register with that of an electronic fund transfer unit, whilst also being more compact, easier to use, more portable and cheaper than the conventional solutions comprising two separate distinct machines that are available on the market at the moment.

This object is achieved by the equipment, or integrated cash register, having the characteristics described in the main claim and designed, in particular, to transmit the transaction data via radio and, therefore, without the inconvenience of connecting cables.

A further object of this invention is to produce a combined cash register and electronic payment device that comprises a reduced number of parts, that both the cashier and the customer will find easier to use.

### BRIEF DESCRIPTION OF THE DRAWINGS

These and other characteristics, objects, and advantages of the invention will become clear from the description that follows of a preferred embodiment, provided by way of a non-restricting example, and with reference to the accompanying drawings, where:
Fig. 1 is a functional diagram of equipment, or an integrated cash register, according to this invention, that integrates the function of a cash register with that of an electronic payment or fund transfer unit;
Fig. 2 is a detailed diagram of a first embodiment of the integrated cash register of Fig. 1; and
Fig. 3 is a diagram of a second embodiment of the integrated cash register of Fig. 1, comprising a telephone unit and shown in combination with a fixed docking station.

### DESCRIPTION OF A PREFERRED MODE FOR CARRYING OUT THE INVENTION

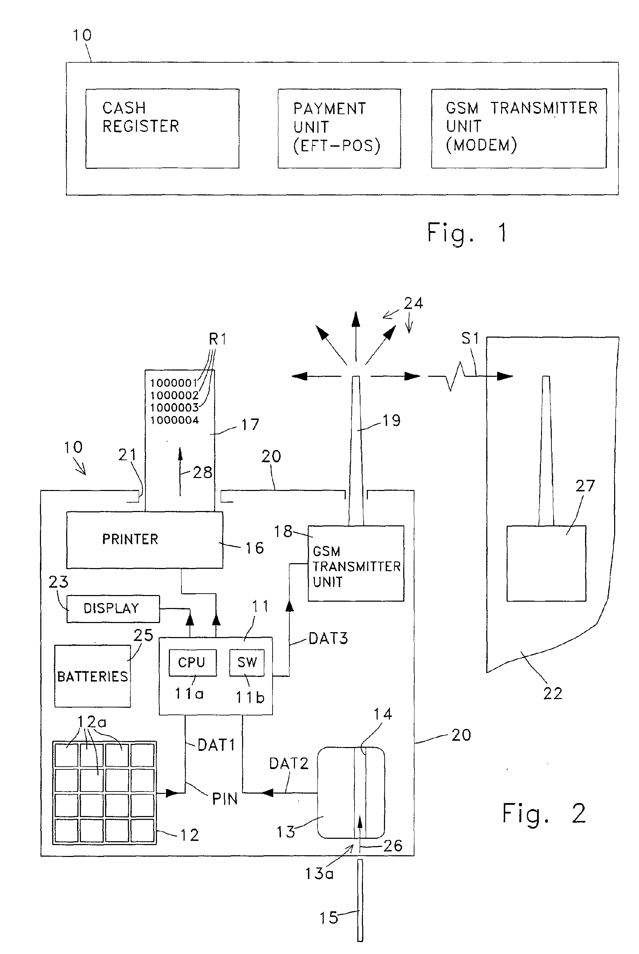

With reference to Fig. 1, equipment according to this invention, combining and integrating the functions of a common cash register and the functions of an electronic payment unit and which will, as a result, hereafter be referred to as an integrated cash register, is designated by the numeral 10 in the figure.

More specifically, the electronic transaction unit, which, for simplicity's sake, will hereafter be referred to as a payment unit, in the equipment 10, is suitable for cooperating with the cash register in effecting payments or in effecting generally the electronic transfer of funds when the cash register is used to effect a payment.

This payment unit is of a well-known kind and is of equivalent performance to the electronic transaction or payment units that are widely used in cash desks at the point of sale but which are separate and distinct from the cash registers themselves. These machines are commonly referred to as EFT-POS, or "Electronic Fund Transfer at Point of Sale" units or, more simply, as FT-POS units.

Generally speaking, these EFT-POS units allow you to effect a payment or, in general, a transfer of funds, without the necessity of having to use cash or other such physical means of payment. As will be further specified below, these machines are typically associated with a device or modem, from the expression "modulator/demodulator", that is designed to send the transaction data to an external remote unit, such as a bank, so that the payment, or generally the transaction, may be processed and carried out, and, for example, recorded on the account of the person making the payment.

More specifically, the equipment 10 shown in Fig. 2 comprises an external casing 20, shown as a continuous line, that encloses and supports the various components of which the equipment 10 consists; a central electronic unit 11, that controls the equipment 10; a single keyboard 12, consisting of a plurality of keys 12a, preferably arranged along one side of the casing 20, in order to facilitate their use by the operator of the equipment 10; an electronic transaction or payment unit 13, for effecting electronic payments or fund transfers without the use of cash; a display 23, for viewing data inputted through the keyboard 12 into the equipment 10, or processed by the latter itself; a printing unit 16, incorporated within the casing 20, and suitable for issuing, for example through the slot 21 in the casing 20, a document 17, such as a paper slip on which the various details of the transaction effected using the equipment 10, are noted and recorded; as well as a transmitter unit 18, associated with the electronic transaction unit 13, for transmitting to the remote unit 22, such as a bank, the payment or transaction data of the transaction that is to be effected.

The transaction or payment unit 13 is enclosed within the casing 20, and has a reader unit 13a, depicted with a groove 14 and that can be easily accessed by the user from outside the cash register 10, by introducing the appropriate payment card 15, required by the payment unit 13, to carry out the transaction.

The characteristics of the type of payment card 15, that needs to be inserted in the payment unit 13, for the transaction to take place are well known. As we have seen, the payment card may be of various kinds such as a BANCOMAT debit card or a VISA credit card, for example.

The payment card may also be a read-only magnetic card, an electronic card with read and write memory, as is the case with the cards known as "chip cards", and it may also incorporate computing and programming functions for a more elaborate and sophisticated handling of the transaction data exchanged with the transaction unit 13, as is the case with so-called "smart cards".

Correspondingly, the transaction unit 13 can be programmed to accept and handle a whole range of different types of payment card 15.

For the sake of completeness, the functioning of the equipment 10, using some of the most commonly used cards on the market, will be described below.

In detail, the central electronic unit 11 consists of a microprocessor 11a (CPU), and a memory unit 11b, for the storage of the data and software (SW) required for the equipment 10 to function, as well as a number of circuits and/or interfaces, which, for the sake of simplicity, have not been shown in Fig. 2, that connect the various components of the equipment 10 together and allow them to communicate electronically with one another.

A battery power supply unit 25 is provided for feeding the correct voltage and current to the various circuits contained within the integrated cash register 10, thus allowing the cash register to operate without the need for bulky or unwieldy external connection cables.

However, whilst remaining within the scope of this invention, it is possible to connect the cash register 10 to the external mains power supply and power it in this way.

An essential characteristic of this invention is that the transmission unit 18 is of a type suitable for communicating with the outside, in particular for transmitting data to the remote unit 22, via radio waves, which are indicated as 24.

For this purpose, the transmission unit 18 also comprises an antenna 19, which transmits and captures the radio waves indicated with 24.

More specifically, the transmission unit 18 uses the GSM, or "Global System for Mobile Communication" standard, allowing it to connect to the GSM network, now present over the whole territory and used for mobile phone communication.

As a result, the integrated cash register 10, like a mobile telephone, does not need to be connected to a fixed landline in order to be able to communicate and can, therefore, transmit the payment data to the remote unit 22, from wherever it is situated or located. Furthermore, being battery powered and, therefore, without the need for any external cables, the integrated cash register 10 is an extremely portable device and can be handled comfortably and situated wherever the user chooses.

The integrated cash register 10 described to this point functions in the following manner.

In the first stage of operation, the operator or cashier using the cash register 10 inputs the data, DAT1, relating to the transaction that the customer is carrying out using the keyboard 12, in exactly the same way as a conventional cash register.

Once this data has been entered, the cash register 10 processes the data it has received and calculates the total sum of money that the customer will have to pay.

The data that have been inputted, as well as the data that has been processed by the cash register 10, are shown on the display 23, allowing both the customer and the cashier to check that they are correct.

Once the data has been inputted and finalised, the cash register 10 will, generally speaking, then produce a receipt 17, printed by the printing unit 16, and issued in the direction indicated by the arrow 28.

As already seen, this paper receipt 17 serves as a document allowing the customer to check the details of the transaction and to keep a record of it once he or she leaves the point of sale.

Once the receipt has been produced, the customer then has to pay the amount of money indicated. The customer inserts his or her payment card 15 into the payment unit 13, and swipes it along the groove 14, in the direction indicated by the arrow 26.

In this way, the payment unit 13 reads the payment card 15, and sends the card identification data or DAT2 to the central electronic unit 11, so that the relevant checks and verifications can be carried out.

At this point, if a debit card such as a bancomat card is being used, the customer keys in the appropriate secret code, or PIN number, from "Personal Identification Number", using the keyboard 12.

Once this has been done, the system that the cash register 10 is inserted in checks whether the PIN number supplied by the customer corresponds to the DAT2 data that was read from the card 15. During this stage, the cash register 10 normally exchanges with and polls a number of remote databases that contain card numbers of a user population and their respective PIN numbers.

If the result of this verification is positive, i.e. if the PIN number entered by the customer does correspond to the DAT2 data contained on the payment card 15, the card is accepted as valid and the cash register 10 is then able to proceed to payment.

When this happens, the central unit 11 sends the data DAT3 defining the payment to be effected, to the transmission unit 18, which then transmits this data externally as signals S1 via radio waves 24 to a remote receiving unit 22.

More specifically, the transmission unit 18 converts the DAT3 data into S1 signals using algorithms and modulation techniques well-known to those acquainted with the sector art and in particular corresponding to the GSM standard.

The S1 signals are then captured by a receiving unit 27, belonging to the remote unit 22, and they are then filtered and converted back into the relevant DAT3 data. At the final stage of the operation, the remote unit 22 processes the DAT3 data and effects the payment concerned by deducting the relevant amount from the customer's bank account.

If the card being used is a credit card, however, such as a VISA card, rather than a debit card, the procedure used by the cash register 10 to effect the payment is essentially the same as that described above, with the sole difference that, once the customer has inserted his or her payment card 15 into the payment unit 13, he or she does not have to perform any further operation such as keying in his or her PIN number. This is because the credit card 15 is recognised on the basis of the data contained on the card itself and, as a result, no PIN number is required to complete the transaction.

At most, the customer will have to sign the receipt provided for the transaction to go ahead.

Due to its compact structure, the equipment 10 presents a number of distinct advantages in comparison with existing solutions. For example, it is extremely portable and can therefore be moved about from one cash desk to another, as it does not need to be connected to any fixed telephone line. Another advantage is that it is much more convenient to be able to insert the card in the same piece of equipment as the cash register itself.

It is, of course, understood that variants and modifications may be made to this equipment 10 without departing from the scope of the invention.

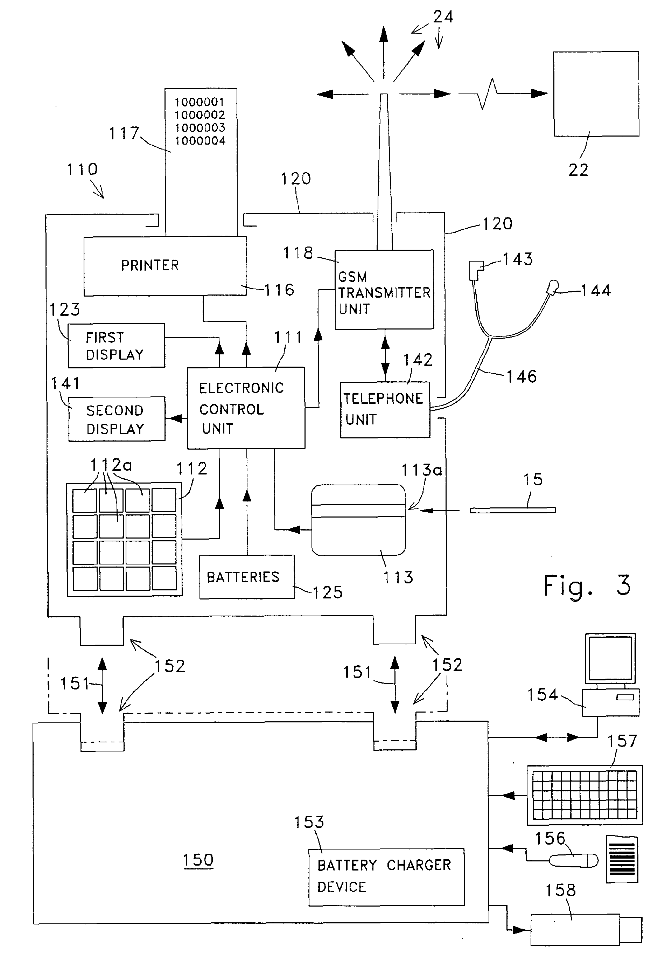

Fig. 3, for example, illustrates one of these variants, indicated with the numeral 110. For the sake of simplicity, all the parts corresponding to the equipment 10 have been labelled with exactly the same number plus 100.

More specifically, the device 110 consists of an eternal casing 120; a central electronic control unit 111; a printer 116, for the emission of a receipt 117; a first display 123, and a second additional display 141; an electronic transaction unit 113, connected to the central electronic unit 111, with an input unit 113a, designed to receive the payment card 15; a single keyboard 112, with a plurality of keys 112a, for manually inputting data into the device 110; a battery power supply unit 125, for feeding electrical power to the device 110; a transmission unit 118, associated with the transaction unit 113, for transmitting the payment data processed by the device 110, to a remote unit such as a bank 22, using radio waves 24; and a telephone unit 142, of known characteristics, which cooperates with the transmission unit 118, in the transmission and reception of voice telephone messages via radio.

The first display 123 and the second display 141 are suitably situated in two different parts of the casing 120, and allow the cashier and the customer respectively to check the data entered into the equipment 110.

More specifically, the telephone unit is equipped with a loudspeaker 143, and a microphone 144, as is normal with telephone equipment. These may be attached to the casing of the equipment 110, or they may be connected to it by a flexible cable 146, as shown in Fig. 3, in which case the loudspeaker comes in the form of an earpiece. The variant 110, therefore, has the additional advantage in that it can be used as a mobile telephone as well as performing all the functions of a conventional cash register and electronic payment device. More specifically, this telephone function means that the equipment 110 can be directly connected, for example, to the INTERNET using the UMTS protocol, thus allowing the equipment 110 to navigate the Internet. As a result, the equipment 110 could access and take advantage of the whole range of JAVA and HTML programmes available on the Internet in carrying out its functions.

Furthermore, although not indicated in the diagram for simplicity's sake, both the printing unit 16 of the integrated cash register 10 and the printing unit 116 of the variant 110 can have more than one printing head.

For example, one printing head can be used to print the details of the transaction on the receipt given to the customer, whilst a second printing head can be used to print the transaction details on an internal roll of paper, which can then be used to cash up at the end of the day. The owner of the cash register would then use this internal roll of paper for fiscal and/or bookkeeping purposes.

Furthermore, both the equipment 10 and the equipment 110 can be stored out of the way and temporarily connected to a fixed docking station 150, when not in use. This fixed docking station is shown by a series of dot-and-dash lines and by the arrows 151 in Fig. 3.

For this purpose, both the equipment 10 and 110 and the docking station 150 can be fitted with coupling and connecting means 152, allowing the equipment 10 and 110 to be positioned correctly in the docking station 150, and ensuring that their respective electronic circuits are connected correctly.

The docking station 150 may be provided with a plurality of functions associated with the use of the equipment 10 and 110, and these functions may be tailored to suit the particular applications that the equipment 10 and 110 use. Generally speaking, the docking station 150 will contain a device 153 suitable for charging the batteries 25 or 125, but it may also contain a number of additional interfaces for improving and expanding the performance of the equipment in question (10 or 110), and for allowing these devices to be used in conjunction with a personal computer 154, and/or a bar-code reader 156, and/or a cash-till when they are connected to the docking station 150.

Again, the docking station 150 may have an additional interface allowing the equipment 10 and 110 to be connected to an additional keyboard with a greater number of functions than the keyboards 12 or 112, or with an additional display. The docking station 150 may also be connected to a cash-till of the kind that is well-known and that is already widely used in conventional cash registers for the orderly handling and storing of cash, including coins.

In this way, the integrated cash register that is the subject of this invention may also be used in combination with a cash-till of this kind. For example, when the cash register 110 is connected to the docking station 150, the cash till 158 may be opened simply by the operator pressing the relevant key on the keyboard 112.

The following table clearly shows the advantages that this invention has over traditional solutions in terms of the reduced number of parts required, the reduction in weight and cost, and in terms of its greater compactness and manageability. It compares the number of main components required to produce the integrated cash register according to the embodiments 10 or 110 with the number of components required to produce the solutions that are already available on the market. As already seen, these solutions comprise a number of separate and distinct pieces of equipment: a conventional cash register, an EFT-POS electronic payment unit, and a separate voice telephone.

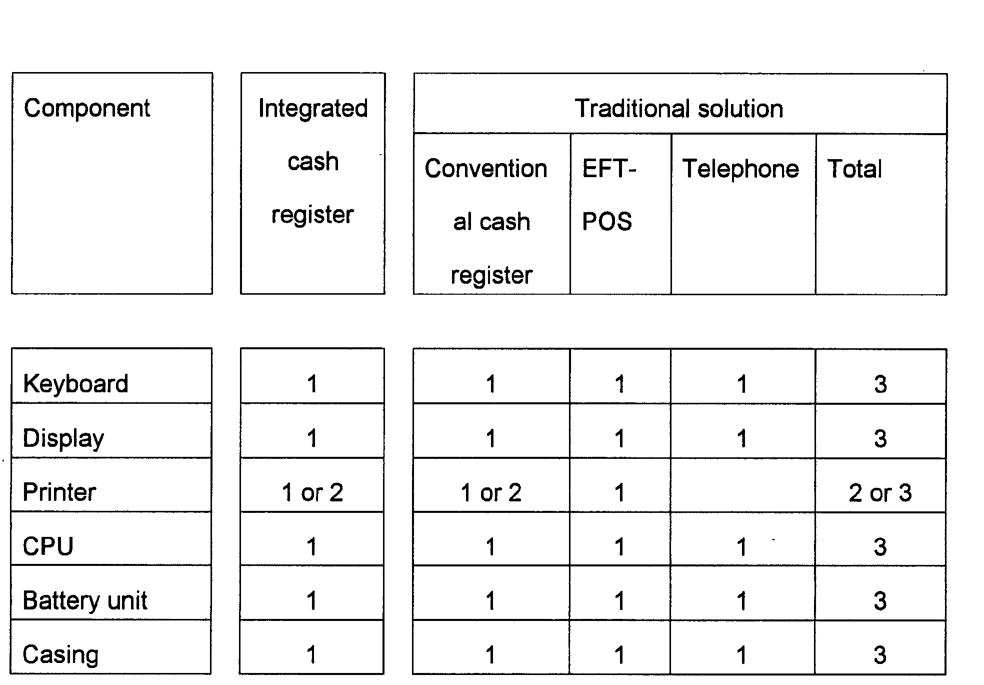

This table clearly illustrates the savings that the integrated cash register of this invention achieves in terms of the overall number of components required.

It remains understood that the integrated cash register described up to this point may be modified and/or improved without in any way exiting from the scope of the invention itself.

## Claims

1. Equipment (10; 110) designed for performing cash and payment operations, in particular at a point of sale, comprising in an integrated structure: a cash register (11, 12, 16, 23; 111, 112, 116, 123) for registering and processing cash transactions involving a payment of money or, in general, a transfer of funds; an electronic transaction unit (13; 113) allowing said transfer of funds to be effected electronically without the use of cash, said electronic transaction unit (13; 113) having an input unit (13a, 14; 113a) suitable for receiving a payment card (15) used to enable said transfer of funds; a central electronic unit (11; 111) for controlling said equipment (10; 110); a single keyboard (12, 12a; 112) for inputting both the transaction data (DAT1) and, where required, the corresponding PIN number of the payment card 15, needed for effecting the transfer of funds electronically; and a transmission unit (18, 19; 118), associated with said electronic transaction unit (13; 113), for the transmission of the fund transfer data (DAT3) to a remote receiving unit (22) via radio waves (24).

2. Equipment according to claim 1, **characterized in that** said transmission unit (18, 19; 118) is of the GSM type.

3. Equipment according to claim 1, **characterized in that** said input unit (13a) of said payment unit (13) comprises a groove (14) arranged along one side of the casing (20) of said equipment (10) for receiving said payment card (15).

4. Equipment according to claim 1, **characterized in that** it further comprises a printing unit (16; 116) and a display (23; 123) for the printing and viewing of the data inputted and/or processed by said equipment (10) respectively.

5. Equipment according to claim 1, **characterized in that** it further comprises an additional display (141) for showing a customer the data processed by said equipment.

6. Equipment according to claim 1, **characterized in that** said payment unit (13; 113) is suitable for reading payment cards (15), that may be chosen from a group consisting of read-only magnetic cards, read and write electronic cards, and electronic smart cards.

7. Equipment according to claim 1, **characterized in that** it comprises connecting means (152) for connecting said equipment to an external docking station (150) when not in use.

8. Equipment (110) according to claim 1, **characterized in that** it further comprises a telephone unit (142) of a well-known kind, for the exchange of voice messages via radio waves (24).

9. Equipment (110) according to claim 8, **characterized in that** said telephone unit (142) is of the UMTS type, allowing the equipment access to the Internet.

10. Equipment according to claim 1, **characterized in that** it comprises a battery power unit (25; 125) allowing said equipment to function without the need for external connection cables.

11. Integrated cash register (10; 110) having an integrated structure comprising: a payment unit (13; 113) for effecting electronically, i.e. without the need for cash, a payment relative to cash transactions managed using said cash register (10; 110), said payment unit (13; 113) having an input unit (13a; 113a) suitable for receiving a payment card (15) used to enable said payment; a single keyboard (12, 12a) for inputting both the transaction data (DAT1) and, where required, the corresponding PIN number of the payment card (15); and a xtransmission uni (18, 19; 118) for transmitting the payment transaction data (DAT3) to a remote receiving unit (22) via radio waves (24).

12. Integrated cash register according to claim 11, **characterized in that** said transmission unit (18, 19) is of the GSM type.

13. Combination consisting of equipment or an integrated cash register (10; 110) according to claim 1 and a docking station (150) with which said equipment (10; 110) is suitable for being temporarily connected when not in use, said docking station (150) being provided with devices associated with the use of said equipment and/or which expand and improve its performance.

14. Combination according to claim 13 wherein said devices belonging to said docking station (150) may be chosen from a group consisting of a battery charging device (153) for charging the batteries (25; 125) used to power said equipment (10; 110), and one or more interfaces for the input/output of data, in particular, for connecting said equipment to a bar-code reader (156) and/or a personal computer (154) and/or an expanded keyboard (157).

15. Combination according to claim 13 further comprising a cash-till (158), associated with said docking station (150), wherein said cash register (110), when connected to said docking station (150), is suitable for commanding the opening of said cash-till.
